# EUROPEAN PATENT SPECIFICATION

(11) **EP 1 939 083 B1**
(45) Date of publication and mention of the grant of the patent: **14.10.2009**
(21) Application number: 07021325.1
(22) Date of filing: 31.10.2007
(51) Int. Cl.: B62K 25/28, B62M 7/12

(54) **Engine suspension system for motorcycle**
Motorenaufhängungssystem für ein Motorrad
Système de suspension de moteur pour motocyclette

(30) Priority: 25.12.2006 JP 2006348301
(43) Date of publication of application: 02.07.2008
(73) Proprietor: Honda Motor Co., Ltd., Minato-ku, Tokyo 107-8556 (JP)
(72) Inventor: Michisaka, Susumu, Wako-shi, Saitama 351-0193 (JP); Hayashi, Hideki, Wako-shi, Saitama 351-0193 (JP); Takahashi, Hirohisa, Wako-shi, Saitama 351-0193 (JP); Hibiya, Junsei, Wako-shi, Saitama 351-0193 (JP)
(74) Representative: Liska, Horst

(56) References cited:
- WO-A-20/04078574
- JP-A- 3 114 991

## Description

### Technical Field

The present invention relates to an engine suspension system for motorcycle. Specifically, the engine suspension system includes a link mechanism between an engine, and link supporting portions, which are provided to a vehicle body frame. The link mechanism includes first links, second links, first stoppers and second stoppers. Each of the first links is swingably joined, at a first end portion thereof, to the engine with an engine-side supporting shaft. Each of the second links is joined, at a first end portion thereof, to a second end portion of the corresponding one of the first links with a joint shaft parallel to the engine-side supporting shaft. Each of the second links also is pivotally supported, at a second end portion thereof, by the corresponding one of the link supporting portions with a frame-side supporting shaft parallel to the joint shaft, so as to be swingable. Each of the first stoppers includes a first elastic member, and is provided between the corresponding one of the first links and the corresponding one of the second links so as to restrict the swinging range of the first links with respect to the second links. Each of the second stoppers includes a second elastic member, and is provided between the corresponding one of the link supporting portions and the corresponding one of the second links so as to restrict the swinging range of the second links with respect to the link supporting portions.

### Background Art

Such an engine suspension system has been known in Japanese Examined Utility Model Publication JP 05-047757 Y. In the engine suspension system of Japanese Examined Utility Model Publication JP 05-047757 Y, second links are arranged respectively on the outer sides of left and right first links. In addition, a first stopper and a second stopper are arranged respectively on the two sides of each of the second links, in a manner of overlapping each other in the side view.

### Problems to be Solved by the Invention

However, in the engine suspension system disclosed in Japanese Examined Utility Model Publication JP 05-047757 Y, the first and second stoppers are arranged respectively at positions overlapping each other in the side view. For this reason, it is necessary to secure, at the positions where the first and second stoppers are arranged, a space required for arranging the first stopper between each of the first links and the corresponding one of the second links, while it is also necessary to secure, at the same positions, a space required for arranging the second stopper between the second link and the corresponding one of the link supporting portions of the vehicle body frame. Accordingly, it is necessary to set relatively large the width between the link supporting portions in the vehicle body frame. In particular, in a case of a motorcycle, such as a large-sized scooter-type motorcycle, the width of a link mechanism is increased as the width of the engine is increased. This thus increases the width of the vehicle body frame. As a result, the width of the motorcycle is increased.

The present invention has been made in consideration of the above-described circumstance. Accordingly, an object of the present invention is to provide an engine suspension system for motorcycle, which makes it possible to reduce the size of the vehicle body frame, and to thus reduce the width of the motorcycle.

### Means for Solving the Problem

For the purpose of achieving the above-described object, a first aspect of the present invention provides an engine suspension system for motorcycle having the following characteristics. Specifically, the engine suspension system includes a link mechanism between an engine and link supporting portions, which are provided on a vehicle body frame. The link mechanism includes first links, second links, first stoppers and second stoppers. Each of the first links is swingably joined, at a first end portion thereof, to the engine with an engine-side supporting shaft. Each of the second links is joined, at a first end portion thereof, to a second end portion of the corresponding one of the first links with a joint shaft parallel to the engine-side supporting shaft. In addition, each of the second links is pivotally supported, at a second end portion thereof, by the corresponding one of the link supporting portions with a frame-side supporting shaft parallel to the joint shaft, so as to be swingable. Each of the first stoppers includes a first elastic member, and is provided between the corresponding one of the first links and the corresponding one of the second links, so as to restrict the swinging range of the first link with respect to the second link. Each of the second stoppers includes a second elastic member, and also is provided between the corresponding one of the link supporting portions and the corresponding one of the second links, so as to restrict the swinging range of the second link with respect to the link supporting portion. In the engine suspension system, each of the first stoppers and the corresponding one of the second stoppers are arranged respectively at positions that are substantially the same in the width direction of the vehicle body frame in the plan view, but that are displaced from each other so as not to overlap each other in the side view.

A second aspect of the present invention provides the following characteristic in addition to the configuration of the first aspect of the present invention. The joint shaft is arranged at positions that are displaced upward and forward of, or upward and rearward of, the respective frame-side supporting shafts. The engine-side supporting shaft is arranged below the joint shaft. Each of the first stoppers and the corresponding one of the second stoppers, which are displaced from each other in the up-and-down direction, are arranged between the axis of the frame-side supporting shafts and the axis of the engine-side supporting shaft in the front-and-rear direction.

A third aspect of the present invention provides the following characteristics in addition to the configuration of any one of the first and second aspects of the present invention. Each of the first elastic members and the corresponding one of the second elastic members are arranged so as to have elastic characteristics different from each other in directional characteristic in a plane orthogonal to the axes of the joint shaft and the frame-side supporting shafts.

A fourth aspect of the present invention provides the following characteristic in addition to the configuration of any one of the first to third aspects of the present invention. The pair of left and right second links are joined to each other with a joint member in between, which is arranged above an intake system of the engine.

A fifth aspect of the present invention provides the following characteristics in addition to the configuration of the fourth aspect of the present invention. The two ends of the joint member are fastened respectively to the left and right second links.

It should be noted that first rubbers 70 in embodiments correspond to the first elastic members of the present invention, and that second rubbers 78 in embodiments correspond to the second elastic members of the present invention.

### Effect of the Invention

According to the first aspect, each of the first stoppers and the corresponding one of the second stoppers are arranged respectively at positions that are substantially the same in the width direction of the vehicle body frame in the plan view, but that are displaced from each other so as not to overlap each other in the side view. Accordingly, it is only necessary to secure a space required for disposing one stopper between the vehicle body frame and each of links that are arranged on the inner side in the width direction of the vehicle body frame among the first and second links. For this reason, each of the links that are arranged on the inner side in the width direction of the vehicle body frame among the first and second links, and the corresponding one of the link supporting portions of the vehicle body frame can be arranged close to each other in the width direction of the vehicle body frame. This makes it possible to set the width of the vehicle body frame smaller than otherwise, and to eventually reduce the width of the motorcycle.

According to the second aspect, the joint shaft is arranged at positions that are displaced upward and forward of, or upward and rearward of, the respective frame-side supporting shafts. In addition, the engine-side supporting shaft is arranged below the joint shaft. Accordingly, it is possible to shorten the wheelbase of the motorcycle by arranging the frame-side supporting shafts and the engine-side supporting shaft close to each other in the front-and-rear direction of the motorcycle, and to thus reduce the size of the motorcycle in the front-and-rear direction. Moreover, in the second aspect, each of the first stoppers and the corresponding one of the second stoppers, which are displaced from each other in the up-and-down direction, are arranged between the axis of the frame-side supporting shafts and the axis of the engine-side supporting shaft in the front-and-rear direction. This makes it possible to dispose the first and second stoppers by effectively utilizing the space between the frame-side supporting shafts and the engine-side supporting shaft, and to thus achieve the reduction in size of the link mechanism.

According to the third aspect, each of the first elastic members and a corresponding one of the second elastic members have elastic characteristics different from each other in directional characteristic. This makes it possible to absorb vibration during traveling, which is associated with the operation of the link mechanism. As a result, it is possible to suppress vibration transmitted to the vehicle body frame, and to thus enhance the riding comfort.

According to the fourth aspect, it is possible to enhance the strength of the pair of left and right second links by joining the second links to each other with the joint member while avoiding interference with the intake system arranged in the vicinity of the link mechanism.

According to the fifth aspect, since the two ends of the joint member are fastened respectively to the second links, it is possible to enhance the mounting accuracy in comparison with the cases of the welding or fitting joint, as well as to finely adjust the left and right arranged components in the link mechanism.

### Brief Description of the Drawings

Fig. 1 is a side view of a motorcycle of a first embodiment.
Fig. 2 is an enlarged side view of a vicinity of an engine and a link mechanism.
Fig. 3 is a perspective view of parts of a vehicle body frame and the link mechanism.
Fig. 4 is a perspective view of the link mechanism.
Fig. 5 is a side view of the link mechanism.
Fig. 6 is a cross-sectional view taken along the line 6-6 in Fig. 2.
Fig. 7 is a cross-sectional view taken along the line 7-7 in Fig. 2.
Fig. 8 is side view showing a second embodiment, and corresponding to Fig. 2.
Fig. 9 is a perspective view of a link mechanism.
Fig. 10 is a side view of the link mechanism.

### Best Modes for Carrying Out the Invention

Hereinafter, modes for carrying out the present invention will be described with reference to embodiments of the present invention shown in the accompanying drawings.

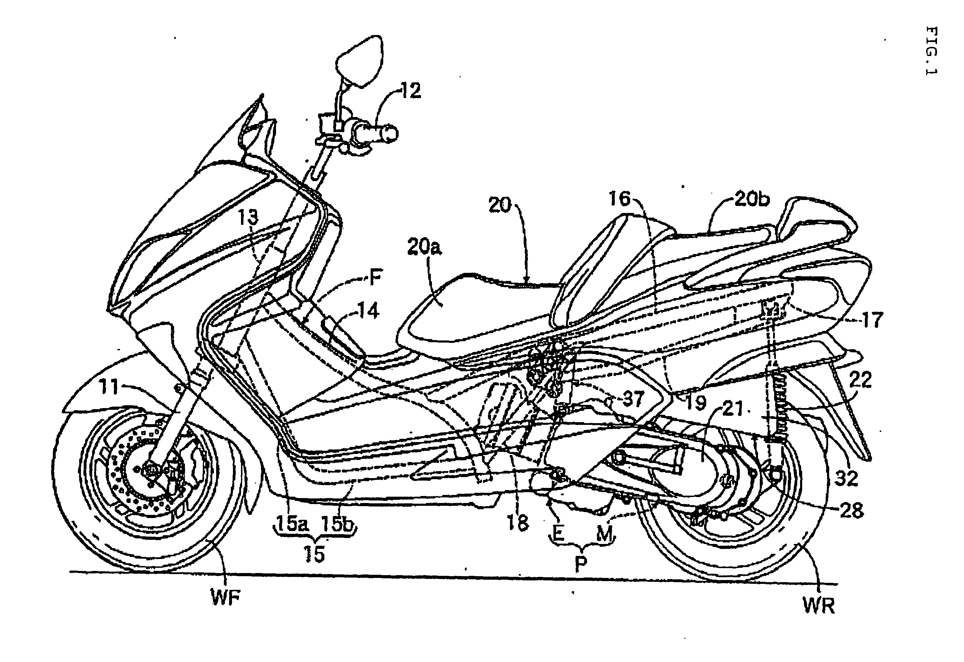

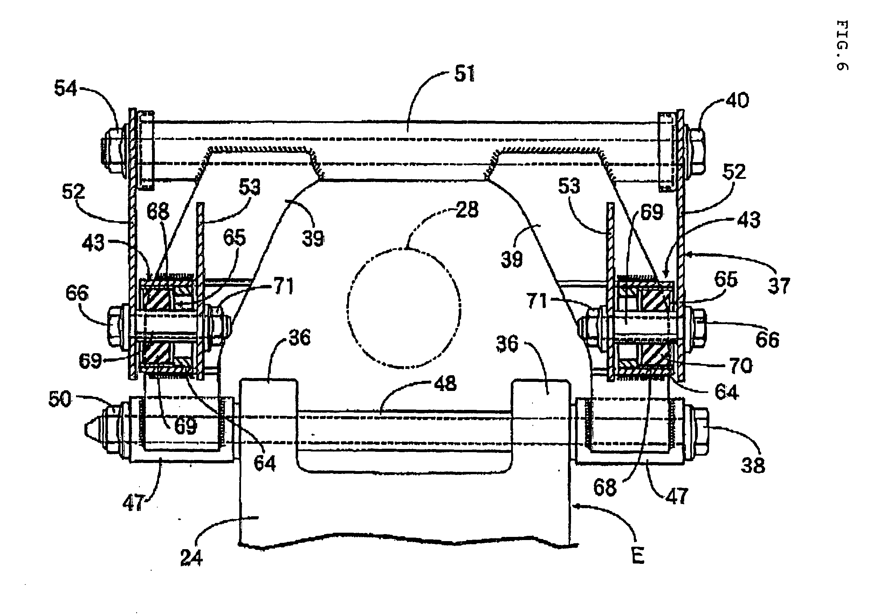

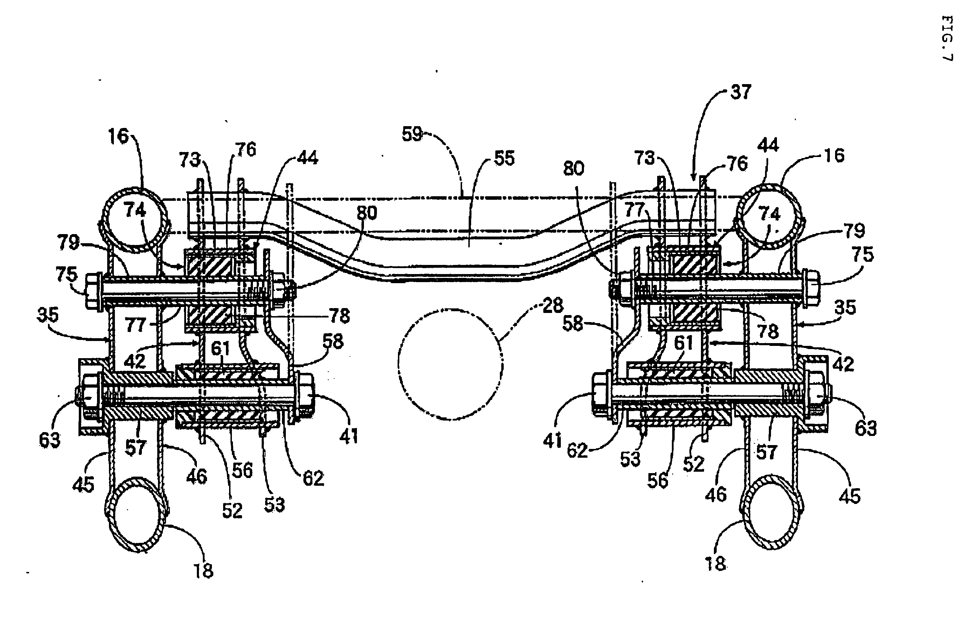

Fig. 1 to Fig. 7 show a first embodiment of the present invention.

Firstly, in Fig. 1, a vehicle body frame F of a scooter-type motorcycle includes a front fork 11 and a head pipe 13, at the front end of the vehicle body frame F. The front fork 11 pivotally supports a front wheel WF while the head pipe 13 movably supports a steering handlebar 12, which is joined to the front fork 11, in a manner that the steering handlebar 12 can be steered. A power unit P, which supports a rear wheel WR at the rear end thereof, is pivotally supported at the middle portion, in the front-and-rear direction, of the vehicle body frame F, so as to be swingable upward and downward.

The vehicle body frame F includes the head pipe 13, a pair of left and right upper down frames 14..., a pair of left and right lower down frames 15..., a pair of left and right seat rails 16..., supporting plates 17..., a pair of left and right joint frames 18..., and a pair of left and right rear frames 19.... The upper down frames 14... are connected to the head pipe 13, and extend rearward and downward. Each of the lower down frames 15 includes an inclined portion 15a and a horizontal portion 15b. The inclined portions 15a are connected to the head pipe 13 below the upper down frames 14..., and extend rearward and downward. The horizontal portions 15b... are connected integrally to the rear ends of the respective inclined portions 15a.... The lower down frames 15... are welded, at the rear ends thereof, to the rear end portions of the respective upper down frames 14.... The seat rails 16... extend rearward and upward from the intermediate portions of the respective upper down frames 14.... The supporting plates 17... extend downward from the rear ends of the respective seat rails 16.... The joint frames 18... connect the rear portions of the respective upper down frames 14... to the rear portions of the corresponding seat rails 16..., and extend rearward and upward. The rear frames 19... connect the intermediate portions of the joint frames 18... to the corresponding supporting plates 17.... On the seat rails 16, a tandem-type rider's seat 20, which includes a front seat 20a and a rear seat 20b, is provided.

The power unit P includes an engine E and a belt-type continuously variable transmission M. The engine E is inclined forward, so that the cylinder axis is horizontal. The continuously variable transmission M is housed in a transmission case 21, and transmits the output of the engine E to the rear wheel WR while varying the speed of the output. The rear wheel WR, which is arranged on the right side of the rear portion of the power unit P, is pivotally supported at the rear portion of the transmission case 21. Moreover, a rear cushion unit 22 is provided between the supporting plates 17... and the power unit P.

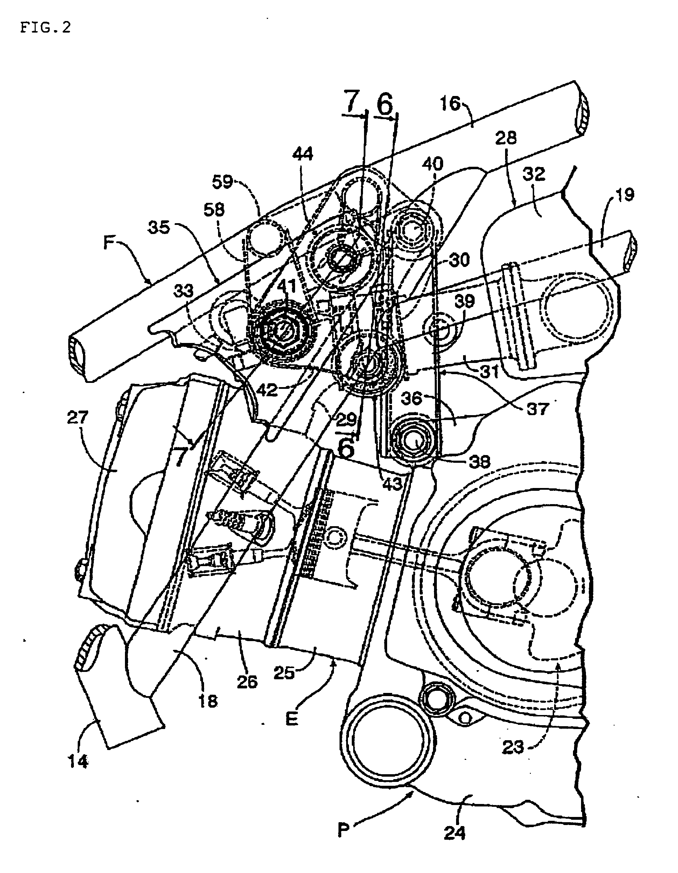

Refer to Fig. 2 as well. The engine E includes a crank case 24, a cylinder block 25, a cylinder head 26 and a head cover 27. The crankcase 24 rotatably supports the crankshaft 23 having a rotational axis parallel to the rotational axis of the rear wheel WR. The cylinder block 25 is joined to the crankcase 24. The cylinder head 26 is joined to the cylinder block 25 on the opposite side to the crankcase 24. The head cover 27 is joined to the cylinder head 26 on the opposite side to the cylinder block 25.

An intake system 28, which extends and protrudes rearward, is connected, at the downstream end portion thereof, to a side face of the upper portion of the cylinder head 26. The intake system 28 includes an intake pipe 29, a throttle body 30, a connecting pipe 31 and an air cleaner 32. The intake pipe 29 is connected to the upper side face of the cylinder head 26. The throttle body 30 is connected to the upstream end portion of the intake pipe 29. The connecting pipe 31 is connected, at the downstream end thereof, to the upstream end of the throttle body 30. The air cleaner 32 is arranged above the belt-type continuously variable transmission M in the power unit P, and is connected to the upstream end of the connecting pipe 31. A fuel injection valve 33 is attached to the intake pipe 29.

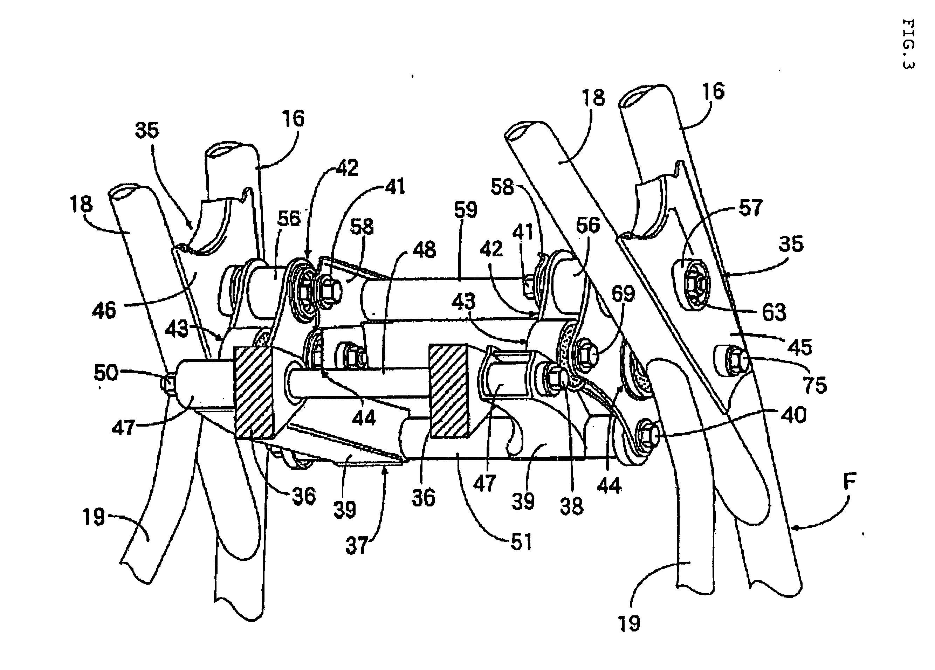

Refer to Fig. 3 as well. A pair of left and right link supporting portions 35... are provided between the intermediate portions of the seat rails 16... and the rear portions of the joint frames 18.... A pair of left and right pivot portions 36 and 36 protrude from the side face of the upper portion of the crankcase 24 in the engine E. The pivot portions 36... are pivotally supported by the respective link supporting portions 35... with the link mechanism 37 in between so as to be swingable.

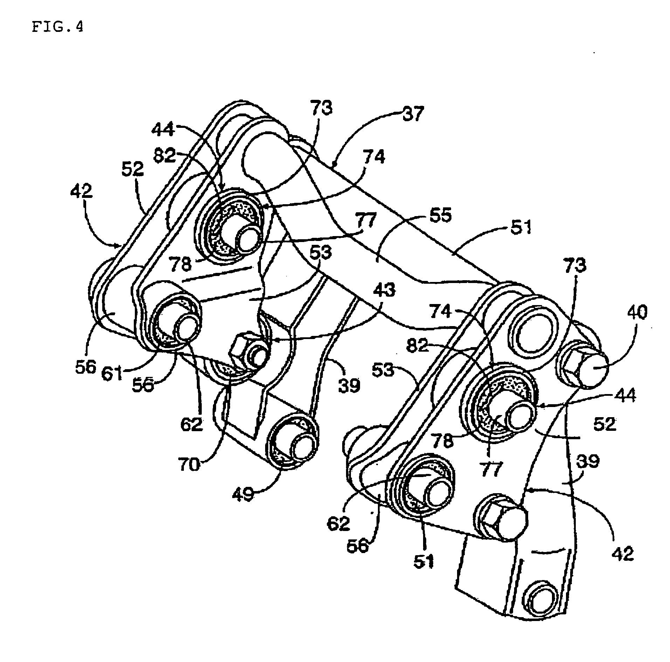

Refer to Fig. 4 to Fig. 7 as well. The link mechanism 37 includes a pair of left and right first links 39 and 39, a pair of second links 42 and 42, a pair of left and right first stoppers 43 and 43, a pair of left and right second stoppers 44 and 44. Each of the first links 39... is swingably joined, at a first end portion thereof, to the engine E with an engine-side supporting shaft 38. Each of the second links 42... is joined, at a first end portion thereof, to a second end portion of the corresponding one of the first links 39... with a joint shaft 40 parallel to the engine-side supporting shaft 38. Each of the second links 42... is also pivotally supported, at a second end portion thereof, to the corresponding one of the link supporting portions 35... with a frame-side supporting shaft 41 parallel to the joint shaft 40, so as to be swingable. Each of the first stoppers 43... includes a first rubber 70, which is a first elastic member, and is provided between the corresponding one of the first links 39... and the corresponding one of the second links 42..., so as to restrict the swinging range of the first links 39... with respect to the second links 42.... Each of the second stoppers 44... includes a second rubber 78, which is a second elastic member, and is provided between the corresponding one of the link supporting portions 35... and the corresponding one of the second links 42..., so as to restrict the swinging range of the second links 42... with respect to the link supporting portions 35....

Each of the link supporting portions 35... includes an outer-side supporting plate 45 and an inner-side supporting plate 46. Each of the outer-side supporting plates 45... is arranged between the intermediate portion of the corresponding one of the seat rails 16... and the rear portion of the corresponding one of the joint frames 18.... Each of the inner-side supporting plates 46 is arranged on the inner side of the corresponding one of the outer-side supporting plates 45....

The pair of left and right first links 39... are arranged on the inner sides, in the width direction of the vehicle body frame F, of the respective link supporting portions 35.... Each of the first links 39... is firmly fixed, at the first end portion thereof, to a corresponding one of cylindrical first collars 47..., which sandwich both of the pivot portions 36... in between. A cylindrical second collar 48 is arranged between the pivot portions 36.... in this state, the engine-side supporting shaft 38, which is a bolt, coaxially penetrates the first collars 47..., the pivot portions 36... and the second collar 48. A rubber bush 49...is provided between each of the first collars 47... and the engine-side supporting shaft 38. By threading and clamping a nut 50 onto the engine-side supporting shaft 38, each of the first links 39... is swingably joined, at the first end portion thereof, to the corresponding one of the pivot portions 36... of the crankcase 24 in the engine E with the engine-side supporting shaft 38. On the other hand, the two ends of the joint pipe 51 is firmly fixed respectively to the second end portions of the respective first links 39..., so that the first links 39... are joined to each other in an integrated manner with the joint pipe 51 in between.

The pair of left and right second links 42... are arranged on the inner sides, in the width direction of the vehicle body frame F, of the respective link supporting portions 35.... Each of the second links 42... includes an outer-side link plate 52 and an inner-side link plate 53. The outer-side link plates 52... abut respectively on the two ends of the joint pipe 51. Each of the inner-side link plates 53... is arranged with an interval on the inner side of the corresponding one of the outer-side link plates 52... along the width direction of the vehicle body frame F in a manner of facing the outer-side link plate 52. The joint shaft 40, which is a bolt, is inserted through the respective outer-side link plates 52 and the joint pipe 51 in the first end portions of the corresponding second links 42.... By threading and fastening a nut 54 onto the joint shaft 40, each of the second links 43... is swingably joined, at the first end portion thereof, to the second end portion of the corresponding one of the first links 39... with the joint shaft 40.

Moreover, a joint member 55, which is a pipe, is firmly fixed, at the two end portions thereof, to the upper portions of the pair of left and right second links 42.... The joint member 55 is arranged above the intake system 28 of the engine E.

A first supporting cylinder 56, which penetrates the corresponding one of the outer-side link plate 52... and the corresponding one of the inner-side link plate 53..., is firmly fixed to the second end portion of the corresponding one of the second links 42.... A shaft supporting member 57 is firmly fixed to the outer-side supporting plate 45 and the inner-side supporting plate 46 of each of the link supporting portions 35... at a position corresponding to the first supporting cylinder 56. Moreover, a supporting plate 58, which faces the inner-side link plate 53 of the corresponding one of the second links 42... from the inner side, is arranged at a position sandwiching the second link 42 in between with the link supporting portion 35. These supporting plates 58... are firmly fixed to a cross member 59, which is provided between the seat rails 16... in the vehicle body frame F.

Rubber bushes 61..., each of which includes an inner cylinder 62, are press-fitted respectively into the first supporting cylinders 56.... The two ends of each of the inner cylinder 62... abut respectively on the corresponding one of the shaft supporting members 57... and on the corresponding one of the supporting plates 58.... Each of the frame-side supporting shafts 41..., which are bolts, is inserted through the corresponding one of the supporting plates 58..., the inner cylinder 62 of the corresponding one of the rubber bushes 61... and the corresponding one of the shaft supporting members 57..., from the inner side in the width direction of the vehicle body frame F. Then, nuts 63 are threaded respectively onto the frame-side supporting shafts 41..., and fastened thereto so as to abut on the corresponding supporting members 57.... As a result, the second links 42... are pivotally supported, at the second end portions thereof, by the link supporting portions 35... with the frame-side supporting shafts 41..., respectively, so as to be swingable.

While the joint shaft 40 joins the second end portions of the first links 39... respectively with the first end portions of the second links 42..., the joint shaft 40 is arranged at a portion that is displaced upward and forward of the frame-side supporting shafts 41..., or displaced upward and rearward thereof. In this embodiment, the joint shaft 40 is arranged at a position displaced upward and rearward of the frame-side supporting shafts 41.... In addition, the engine-side supporting shaft 38 is arranged below the joint shaft 40. Accordingly, the first links 39... are arranged in a manner of extending in the up-and-down direction.

Each of the first stoppers 43... is constituted of a second supporting cylinder 64, a rubber bush 65 and a first restricting bolt 66. Each of the second supporting cylinders 64... has an axis parallel to the joint shaft 40, and is firmly fixed to the intermediate portion of the corresponding one of the first links 39.... The rubber bushes 65... are press-fitted respectively into the second supporting cylinders 64. The first restricting bolts 66... are inserted respectively into the rubber bushes 65..., and are fixed to the second links 42....

Concave portions 67..., into which parts of the respective second supporting cylinders 64... are fitted, are provided respectively in surfaces of the intermediate portions of the first links 39..., on the side of the second links 42.... The second supporting cylinders 64... are firmly fixed respectively to the first links 39... in the state of fitting into the corresponding concave portions 67....

Each of the rubber bushes 65... is constituted of an outer cylinder 68, an inner cylinder 69 and a first rubber 70. The outer cylinders 68... are press-fitted respectively into the second supporting cylinders 64.... Each of the inner cylinders 69... is coaxially surrounded by the corresponding one of the outer cylinders 68.... Each of the first rubbers 70..., which are the first elastic members, is provided between the corresponding one of the inner cylinders 69... and the corresponding one of the outer cylinders 68.... Each of the first rubbers 70... is bonded on the inner periphery of the corresponding one of the outer cylinders 68... and on the outer periphery of the corresponding one of the inner cylinders 69....

The two ends, in the axial direction, of each of the inner cylinders 69... abut respectively on the outer-side link plate 52 and the inner-side link plate 53 of the corresponding one of the second links 42.... The first restricting bolt 66 is inserted from the outer side through each of the outer-side link plates 52..., the corresponding one of the inner cylinders 69... and the corresponding one of the inner-side link plates 53..., and then a nut 71 is threaded onto each of the first restricting bolts 66... so as to abut on, and be engaged with the corresponding one of the inner-side link plates 53....

Each of the second stoppers 44... is constituted of a third supporting cylinder 73, a rubber bush 74 and a second restricting bolt 75. Each of the third supporting cylinders 73... has an axis parallel to the frame-side supporting shafts 41, and is firmly fixed to the intermediate portion of the corresponding one of the second links 42.... The rubber bushes 74... are press-fitted respectively into the third supporting cylinders 73.... The second restricting bolts 75... are inserted respectively through the rubber bushes 74..., and are fixed to the vehicle body frame F.

Each of the third supporting cylinders 73... is firmly fixed to the intermediate portion of the corresponding one of the second links 42... in a state of penetrating the corresponding one of the outer-side link plates 52... and the corresponding one of the inner-side link plates 53.... Each of the rubber bushes 74... is constituted of an outer cylinder 76, an inner cylinder 77 and a second rubber 78. The outer cylinders 76... are press-fitted respectively into the third supporting cylinders 73.... Each of the inner cylinders 77... is coaxially surrounded by the corresponding one of the outer cylinders 76.... Each of the second rubbers 78..., which are the second elastic members, is provided between the corresponding one of the inner cylinders 77... and the corresponding one of the outer cylinders 76.... Each of the second rubbers 78... is bonded on the inner periphery of the corresponding one of the outer cylinders 76... and on the outer periphery of the corresponding one of the inner cylinders 77....

Cylindrical members 79..., which penetrate the respective outer-side supporting plates 45... and the corresponding inner-side supporting plates 46..., are firmly fixed respectively to the link supporting portions 35.... The two ends, in the axial direction, of each of the inner cylinders 77... abut respectively on the corresponding one of the supporting plates 58... and the corresponding one of the cylindrical members 79.... The second restricting bolt 75 is inserted from the outer side through the corresponding one of the cylindrical members 79..., the corresponding one of the inner cylinders 77... and the corresponding one of the supporting plates 58.... Then, a nut 80 is threaded onto each of the second restricting bolts 75... so as to abut on, and be engaged with the corresponding one of the supporting plates 58....

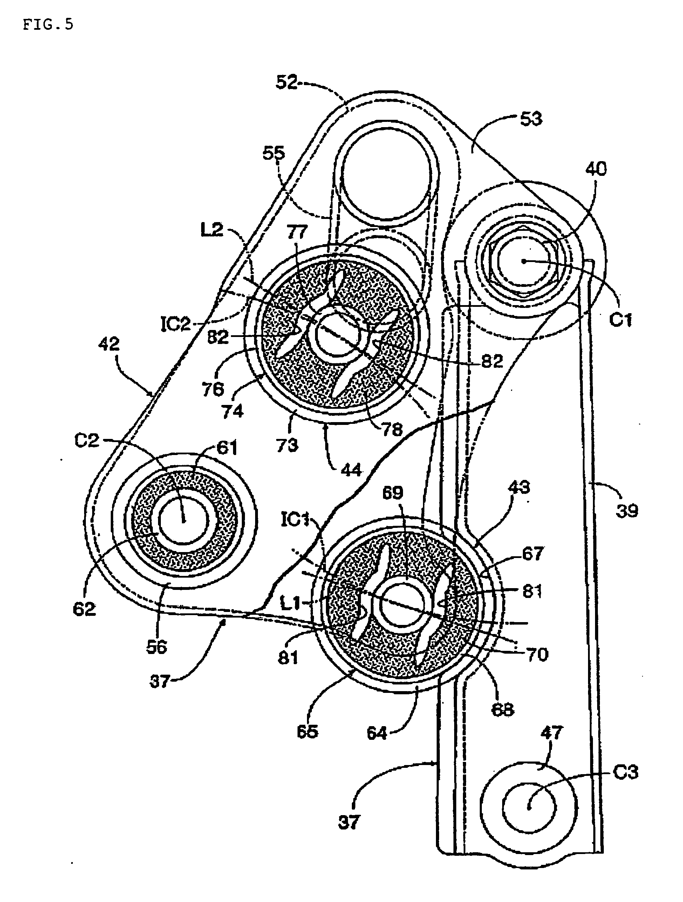

As shown in Fig. 5, a first imaginary circle IC1, which is centered around the axis C1 of the joint shaft 40, and which passes through the axis of the second supporting cylinder 64, is supposed to be drawn in a plane orthogonal to the axis C1 of the joint shaft 40. Opening portions 81 and 81 are provided in the first rubber 70 of the first stopper 43 in the manner of being arranged respectively on the two sides of the inner cylinder 69. The opening portions 81 and 81 extend substantially parallel to each other in a direction orthogonal to a tangent line L1 passing through the axis of the second supporting cylinder 64 among tangent lines of the first imaginary circle IC1. In addition, the first rubber 70 has an elastic characteristic with a directional characteristic in which a spring constant in a direction along the tangent line L1 of the first imaginary circle IC1 is smaller than those in the other directions.

In addition, a second imaginary circle IC2, which has the axis C2 of the frame-side supporting shaft 41 as the center, and which passes through the axis of the third supporting cylinder 73, is supposed to be drawn in a plane orthogonal to the axis C2 of the frame-side supporting shaft 41. Opening portions 82 and 82 are provided in the second rubber 78 of the second stopper 44 in the manner of being arranged respectively on the two sides of the inner cylinder 77. The opening portions 82 and 82 extends substantially parallel to each other in a direction orthogonal to a tangent line L2 passing through the axis of the third supporting cylinder 73 among tangent lines of the second imaginary circle IC2. In addition, the second rubber 78 has an elastic characteristic with a directional characteristic in which a spring constant in a direction along the tangent line L2 of the second imaginary circle IC2 is smaller than those in the other directions.

The tangent lines L1 and L2 are not parallel to each other in the plane orthogonal to the axes C1 and C2 respectively of the joint shaft 40 and the frame-side supporting shaft 41. Accordingly, the first and second rubbers 70 and 78 are arranged so as to have the elastic characteristics different from each other in directional characteristic in the plane orthogonal to the axes C1 and C2 respectively of the joint shaft 40 and the frame-side supporting shaft 41.

Moreover, the first and second stoppers 43 and 44 are arranged respectively at positions that are substantially the same along the width direction of the vehicle body frame F on the plan view, but that are displaced so as not to overlap each other in the side view. As is clear from Fig. 5, the first and second stopper 43 and 44 are displaced from each other in the up-and-down direction in a manner that the second stopper 44 is arranged above the first stopper 43. Concurrently, the first and second stoppers 43 and 44 are also arranged between the axis C2 of the frame-side supporting shaft 41 and the axis C3 of the engine-side supporting shaft 38 in the front-and-rear direction of the motorcycle.

Next, the effects of the first embodiment will be described. Each of the first stoppers 43... and the corresponding one of the second stoppers 44... are arranged respectively at positions that are substantially the same along the width direction of the vehicle body frame F on the plan view, but that are displaced so as not to overlap each other in the side view. Accordingly, it is only necessary to secure a space for disposing only one stopper between each of the first links 39..., which are arranged on the inner sides in the width direction of the vehicle body frame F among the first and second links 39... and 42..., and the corresponding one of the link supporting portions 35... of the vehicle body frame F. For this reason, each of the first links 39... and the corresponding one of the link supporting portions 35... of the vehicle body frame F can be arranged close to each other in the width direction of the vehicle body frame F. This makes it possible to set the width of the vehicle body frame F smaller than otherwise, and to eventually reduce the width of the motorcycle.

In addition, the joint shaft 40, which joins the first links 39... and the respective second links 42... to each other, is arranged to be displaced upward and rearward with respect to the frame-side supporting shafts 41.... Concurrently, the engine-side supporting shaft 38 is arranged below the joint shaft 40. This makes it possible to shorten the wheelbase of the motorcycle by arranging the frame-side supporting shafts 41... and the engine-side supporting shaft 38 close to each other in the front-and-rear direction of the motorcycle, and to thus reduce the size of the motorcycle in the front-and-rear direction. Moreover, the first and second stoppers 43... and 44..., which are displaced from each other in the up-and-down direction, are arranged between the axis C2 of the frame-side supporting shafts 41... and the axis C3 of the engine-side supporting shaft 38 in the front-and-rear direction. Accordingly, it is possible to arrange the first and second stoppers 43... and 44... by utilizing the space between the frame-side supporting shafts 41... and the engine-side supporting shaft 38, and to thus achieve the reduction in size of the link mechanism 37.

Moreover, the elastic characteristics of the respective first and second rubbers 70... and 78... of the respective first and second stoppers 43... and 44... have the directional characteristics that are different from each other in the plane orthogonal to the axes of the joint shaft 40 and the frame-side supporting shafts 41.... Accordingly, vibration during traveling, which is associated with the operation of the link mechanism 37, is absorbed. As a result, it is possible to suppress vibration transmitted to the vehicle body frame F side, and to thus enhance the riding comfort.

Furthermore, the pair of left and right second links 42... are joined to each other with the joint member 55, which is arranged above the intake system 28 of the engine E. Accordingly, it is possible to enhance the strength of the pair of left and right second links 42... by joining the second links 42... to each other with the joint member 55 while avoiding interference with the intake system 28 arranged in the vicinity of the link mechanism 37.

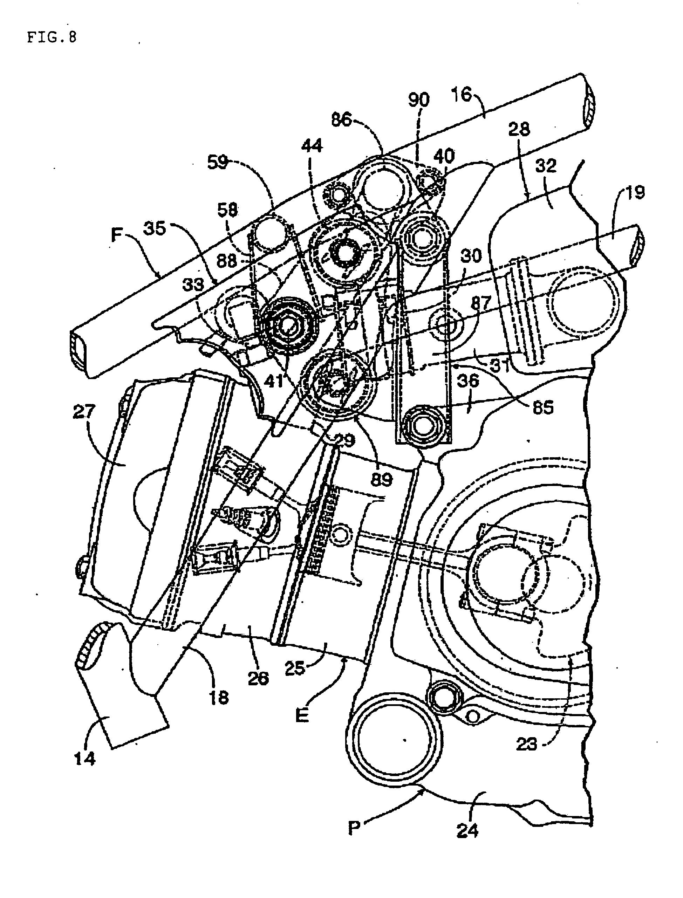

Fig. 8 to Fig. 10 show a second embodiment of the present invention.

Incidentally, in the second embodiment, the components, corresponding to those in the first embodiment, are only illustrated with the descriptions of the same reference numerals provided thereto, and will not be described in detail.

Firstly, refer to Fig. 8. The pair of left and right pivot portions 36..., which are provided on the side face of the upper portion of the crankcase 24 in the engine E, are pivotally supported by the pair of left and right link supporting portions 35... with a link mechanism 85, so as to be swingable.

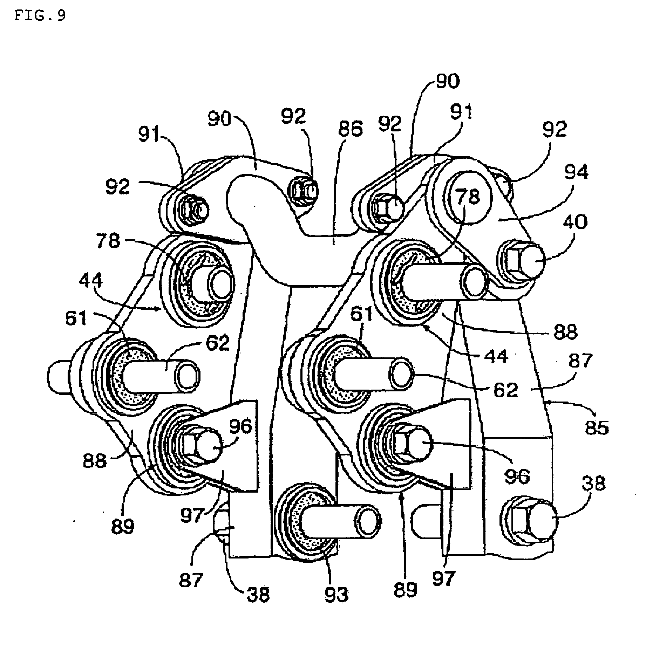

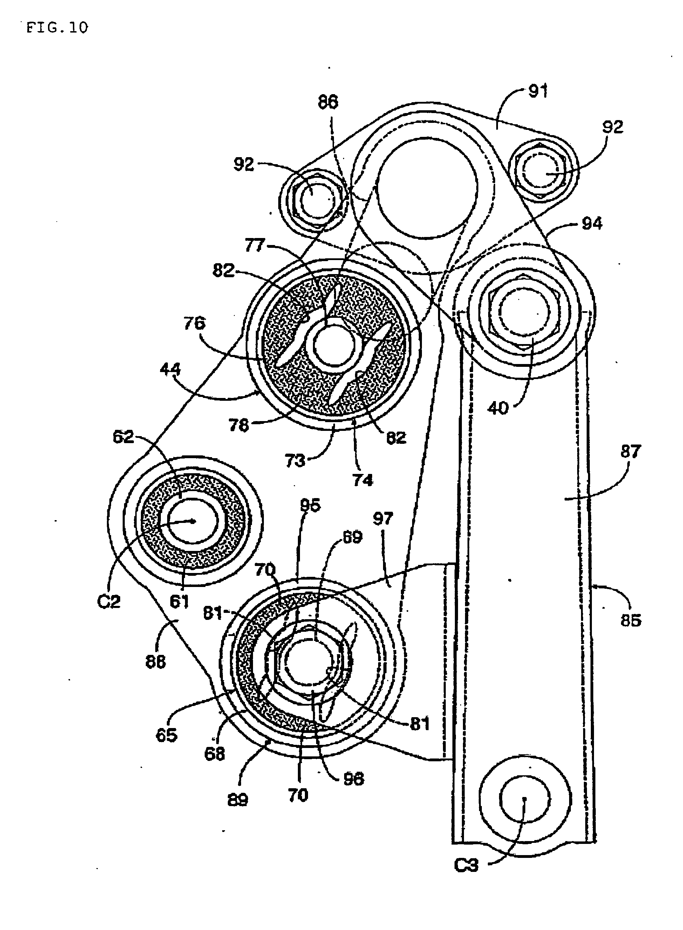

Refer to Fig. 9 and Fig. 10 as well. The link mechanism 85 includes a pair of left and right first links 87..., a pair of left and second links 88..., a pair of left and right first stoppers 89..., the pair of left and right second stoppers 44. Each of the first links 87... is swingably joined, at a first end portion thereof, to the engine E with an engine-side supporting shaft 38. Each of the second links 88... is joined, at a first end portions thereof, to a second end portion of the corresponding one of the first links 87... with the joint shaft 40, and is also pivotally supported, at a second end portion, by the corresponding one of the link supporting portions 35... with the frame-side supporting shaft 41, so as to be swingable. The first stopper 89 is provided between each of the first links 87... and the corresponding one of the second links 88... so as to restrict the swinging range of the first link 87 with respect to the second links 88.... The second stopper 44 is provided between each of the link supporting portions 35... and the corresponding one of the second links 88... so as to restrict the swinging range of the second link 88 with respect to the link supporting portion 35....

The upper portions of the pair of left and right second links 88... are joined to each other with a joint member 86 having a pipe shape, which is arranged above an intake system 28. Flanges 90..., which are provided to the two end portions of the joint member 86, are fastened respectively to flanges 91..., which are provided integrally and contiguously to the upper portions of the respective second links 88..., by using, for example, a pair of bolts 92, 92....

A rubber bush 93 is provided between the first end portion of each of the first links 87... and the engine-side supporting shaft 38. In addition, joint plates 94... are firmly fixed respectively to the two ends of the joint member 86, which penetrates the flanges 90... and 91... as well as the first end portions of the second links 88.... Each of the joint plates 94... faces the second end portion of the corresponding one of the first links 87... from the outer side. The second end portion of each of the first links 87... and the corresponding one of the joint plates 94... are connected to each other with the joint shaft 40.

Each of the first stoppers 89..., which is provided between one of the first links 87... and the corresponding one of the second links 88..., is constituted of a fourth supporting cylinder 95, a rubber bush 65, and a third restricting bolt 96. Each of the fourth supporting cylinders 95 and 95 has an axis parallel to the joint shaft 40, and is firmly fixed to the corresponding one of the second links 88.... The rubber bushes 65... are press-fitted respectively into the fourth supporting cylinders 95 and 95. The third restricting bolts 96 and 96 are inserted respectively through the rubber bushes 65..., and are fixed to the corresponding first links 87....

Brackets 97 and 97 are firmly fixed respectively to the intermediate portions of the first links 87... on the second link 88 sides so as to sandwich the fourth supporting cylinders 95... from both sides thereof. The third restricting bolts 96... are inserted respectively through the inner cylinders 69... of the rubber bushes 65..., and are fixed to the corresponding brackets 97....

In addition, as in the case of the first embodiment, each of the first stoppers 89... and the corresponding one of the second stoppers 44... are arranged respectively at positions that are substantially the same along the width direction of the vehicle body frame F on the plan view, but that are displaced so as not to overlap each other in the side view. Moreover, the joint shaft 40, which joins each of the first links 87... and the corresponding one of the second links 88... to each other, are also arranged to be displaced upward and rearward with respect to the frame-side supporting shafts 41.... The engine-side supporting shaft 38 is arranged below the joint shaft 40. The first and second stoppers 43... and 44..., which are displaced from each other in the up-and-down direction, are arranged between the axis C2 of the frame-side supporting shafts 41... and the axis C3 of the engine-side supporting shaft 38 in the front-and-rear direction of the motorcycle. The elastic characteristics of the respective first and second rubbers 70... and 78... of the respective first and second stoppers 89... and 44... have the directional characteristics that are different from each other in the plane orthogonal to the axes of the joint shaft 40 and the frame-side supporting shafts 41....

According to the second embodiment, it is possible to obtain the same effects as those of the first embodiment. Moreover, since the two ends of the joint member 86 are fastened respectively to the left and right second links 88..., it is possible to enhance the mounting accuracy in comparison with the cases of the welding or fitting joint, as well as to finely adjust the left and right arranged components in the link mechanism 85.

The embodiments of the present invention have been described above. However, the present invention is not limited to these embodiments, and various modifications in design may be made on these embodiments without departing from the present invention described in the scope of claims.

The invention is directed to making it possible to reduce the size of a motorcycle by setting the width of a vehicle body frame smaller with an engine suspension system for motorcycle including, between a vehicle body frame and an engine, a link mechanism including: first links, each of which is swingably joined, at a first end portion thereof, to the engine with an engine-side supporting shaft; second links, each of which is joined, at a first end portion thereof, to a second end portion of the corresponding one of the first links with a joint shaft parallel to the engine-side supporting shaft, and also each of which is pivotally supported, at a second end portion thereof, by the corresponding one of the link supporting portions with a frame-side supporting shaft parallel to the joint shaft, so as to be swingable; first stoppers, each of which includes a first elastic member, and each of which is provided between the corresponding one of the first links and the corresponding one of the second links, so as to restrict the swinging range of the first link with respect to the second link; and second stoppers, each of which includes a second elastic member, and also each of which is provided between the corresponding one of the link supporting portions and the corresponding one of the second links, so as to restrict the swinging range of the second link with respect to the link supporting portion.

Each of the first stoppers and the corresponding one of the second stoppers are arranged respectively at positions that are substantially the same in the width direction of the vehicle body frame in the plan view, but that are displaced from each other so as not to overlap each other in the side view.

## Claims

1. An engine suspension system for motorcycle comprising a link mechanism (37, 85) between an engine (E) and link supporting portions (35), which are provided on a vehicle body frame (F), the link mechanism (37, 85) including:
first links (39, 87), each of which is swingably joined, at a first end portion thereof, to the engine (E) with an engine-side supporting shaft (38);
second links (42, 88), each of which is joined, at a first end portion thereof, to a second end portion of the corresponding one of the first links (39, 87) with a joint shaft (40) parallel to the engine-side supporting shaft (38), and also each of which is pivotally supported, at a second end portion thereof, by the corresponding one of the link supporting portions (35) with a frame-side supporting shaft (41) parallel to the joint shaft (40) so as to be swingable;
first stoppers (43, 89), each of which includes a first elastic member, and each of which is provided between the corresponding one of the first links (39, 87) and the corresponding one of the second links (42, 88) so as to restrict the swinging range of the first links (39, 87) with respect to the second links (42, 88); and
second stoppers (44), each of which includes a second elastic member, and also each of which is provided between the corresponding one of the link supporting portions (35) and the corresponding one of the second links (42, 88) so as to restrict the swinging range of the second links (42, 88) with respect to the link supporting portions (35),
**characterized in that**
each of the first stoppers (43, 89) and the corresponding one of the second stoppers (44) are arranged respectively at positions that are substantially the same in the width direction of the vehicle body frame (F) in the plan view, but that are displaced from each other so as not to overlap each other in the side view.

2. The engine suspension system for motorcycle according to claim 1, wherein
the joint shaft (40) is arranged at positions that are displaced upward and forward of, or upward and rearward of, the respective frame-side supporting shafts (41),
the engine-side supporting shaft (38) is arranged below the joint shaft (40), and
each of the first stoppers (43, 89) and the corresponding one of the second stoppers (44), which are displaced from each other in the up-and-down direction, are arranged between the axis of the frame-side supporting shafts (41) and the axis of the engine-side supporting shaft (38) in the front-and-rear direction.

3. The engine suspension system for motorcycle according to any one of claims 1 and 2, wherein each of the first elastic members and a corresponding one of the second elastic members are arranged so as to have elastic characteristics different from each other in directional characteristic in a plane orthogonal to the axes of the joint shaft (40) and the frame-side supporting shafts (41).

4. The engine suspension system for motorcycle according to any one of claims 1 to 3, wherein the pair of left and right second links (42, 88) are joined to each other with a joint member (55, 86) in between, which is arranged above an intake system of the engine (E).

5. The engine suspension system for motorcycle according to claim 4, wherein the two ends of the joint member (55, 86) are fastened respectively to the left and right second links (42, 88).

## Patentansprüche

1. Motoraufhängungssystem für ein Kraftrad, umfassend einen Verbindungsmechanismus (37, 85) zwischen einem Motor (E) und Verbindungstragabschnitten (35), welche an einem Fahrzeugkörperrahmen (F) vorgesehen sind, wobei der Verbindungsmechanismus (37, 85) umfasst:
erste Verbindungsglieder (39, 87), von denen jedes an einem ersten Endabschnitt desselben durch eine motorseitige Tragwelle (38) schwenkbar mit dem Motor (E) verbunden ist;
zweite Verbindungsglieder (42, 88), von denen jedes an einem ersten Endabschnitt desselben mit einem zweiten Endabschnitt von dem entsprechenden einen von den ersten Verbindungsgliedern (39, 87) durch eine zu der motorseitigen Tragwelle (38) parallele Verbindungswelle (40) verbunden ist, und von denen auch jedes an einem zweiten Endabschnitt desselben durch den entsprechenden einen der Verbindungstragabschnitte (35) schwenkbar mit einer zu der Verbindungswelle (40) parallelen rahmenseitigen Tragwelle (41) verbunden ist, sodass sie schwenkbar ist;
erste Anschläge (43, 89), von denen jeder ein erstes elastisches Element umfasst, und von denen jeder zwischen dem entsprechenden einen von den ersten Verbindungsgliedern (39, 87) und dem entsprechenden einen von den zweiten Verbindungsgliedern (42, 88) vorgesehen ist, um den Schwenkbereich der ersten Verbindungsglieder (39, 87) in Bezug auf die zweiten Verbindungsglieder (42, 88) zu begrenzen; und
zweite Anschläge (44), von denen jeder ein zweites elastisches Element umfasst, und von denen auch jeder zwischen dem entsprechenden einen von den Verbindungstragabschnitten (35) und dem entsprechenden einen von den zweiten Verbindungsgliedern (42, 88) vorgesehen ist, um den Schwenkbereich der zweiten Verbindungsglieder (42, 88) in Bezug auf die Verbindungstragabschnitte (35) zu begrenzen,
**dadurch gekennzeichnet, dass**
jeder von den ersten Anschlägen (43, 89) und der entsprechende eine von den zweiten Anschlägen (44) jeweils an Positionen angeordnet sind, welche in der Draufsicht in der Breitenrichtung des Fahrzeugkörperrahmens (F) im Wesentlichen die selben sind, aber welche voneinander versetzt sind, so dass sie einander in der Seitenansicht nicht überlappen.

2. Motoraufhängungssystem für ein Kraftrad gemäß Anspruch 1, wobei
die Verbindungswelle (40) an Positionen angeordnet ist, welche von den jeweiligen rahmenseitigen Tragwellen (41) nach oben und nach vorne, oder nach oben und hinten verlagert sind,
die motorseitige Tragwelle (38) unter der Verbindungswelle (40) angeordnet ist, und
jeder von den ersten Anschlägen (43, 89) und der entsprechende eine von den zweiten Anschlägen (44), welche voneinander in der Auf-und-AbRichtung versetzt sind, zwischen der Achse von den rahmenseitigen Tragwellen (41) und der Achse von der motorseitigen Tragwelle (38) in der Vorne-und-Hinten-Richtung angeordnet sind.

3. Motoraufhängungssystem für ein Kraftrad gemäß einem der Ansprüche 1 und 2, wobei jedes von den ersten elastischen Elementen und ein entsprechendes von den zweiten elastischen Elementen derart angeordnet sind, dass sie Elastizitätscharakteristika haben, welche sich voneinander in einer Richtungscharakteristik in einer Ebene orthogonal zu den Achsen von der Verbindungswelle (40) und den rahmenseitigen Tragwellen (41) unterscheiden.

4. Motoraufhängungssystem für ein Kraftrad gemäß einem der Ansprüche 1 bis 3, wobei das Paar von linken und rechten zweiten Verbindungsgliedern (42, 88) mit einem Verbindungselement (55, 86) dazwischen, welches über dem Einlasssystem des Motors (E) angeordnet ist, miteinander verbunden sind.

5. Motoraufhängungssystem für ein Kraftrad gemäß Anspruch 4, wobei die zwei Enden von dem Verbindungselement (55, 86) jeweils an den linken und rechten zweiten Verbindungsgliedern (42, 88) befestigt sind.

## Revendications

1. Système de suspension de moteur pour une motocyclette comprenant un mécanisme de liaison (37, 85) entre un moteur (E) et des parties de support d'éléments de liaison (35), qui sont prévus sur un cadre de véhicule (F), le mécanisme de liaison (37, 85) comprenant :
des premiers éléments de liaison (39, 87), chacun d'eux étant joint de manière pivotante, à une première partie d'extrémité de celui-ci, au moteur (E) par un arbre de support côté moteur (38) ;
des deuxièmes éléments de liaison (42, 88), chacun d'eux étant joint, à une première partie d'extrémité de celui-ci, à une deuxième partie d'extrémité de l'élément de liaison correspondant parmi les premiers éléments de liaison (39, 87) par un arbre d'accouplement (40) parallèle à l'arbre de support côté moteur (38), et chacun d'eux étant également supporté de manière pivotante, à une deuxième extrémité de celui-ci, par la partie correspondante parmi les parties de support d'éléments de liaison (35) par un arbre de support côté cadre (41) parallèle à l'arbre d'accouplement (40) de manière à pouvoir pivoter ;
des premières butées (43, 89), chacune d'elles comprenant un premier élément élastique, et chacune d'elles étant prévue entre l'élément correspondant parmi les premiers éléments de liaison (39, 87) et l'élément correspondant parmi les deuxièmes éléments de liaison (42, 88) de manière à limiter la plage de pivotement des premiers éléments de liaison (39, 87) par rapport aux deuxièmes éléments de liaison (42, 88) ; et
des deuxièmes butées (44), chacune d'elles comprenant un deuxième élément élastique, et chacune d'elles étant également prévue entre la partie correspondante parmi les parties de support d'éléments de liaison (35) et l'élément correspondant parmi les deuxièmes éléments de liaison (42, 88) de manière à limiter la plage de pivotement des deuxièmes éléments de liaison (42, 88) par rapport aux parties de support d'éléments de liaison (35),
**caractérisé en ce que**
chacune des premières butées (43, 89) et la butée correspondante parmi les deuxièmes butées (44) sont respectivement agencées à des positions qui sont sensiblement identiques dans la direction de largeur du cadre de véhicule (F) en vue plane, mais qui sont décalées l'une de l'autre de manière à ne pas se chevaucher l'une l'autre en vue latérale.

2. Système de suspension de moteur pour une motocyclette selon la revendication 1, dans lequel
l'arbre d'accouplement (40) est agencé à des positions qui sont décalées vers le haut et vers l'avant, ou vers le haut et vers l'arrière, des arbres de support côté cadre (41) respectifs,
l'arbre de support côté moteur (38) est agencé au-dessous de l'arbre d'accouplement (40), et
chacune des premières butées (43, 89) et la butée correspondante parmi les deuxièmes butées (44), qui sont décalées l'une de l'autre dans la direction vers le haut et vers le bas, sont agencées entre l'axe des arbres de support côté cadre (41) et l'axe de l'arbre de support côté moteur (38) dans la direction vers l'avant et vers l'arrière.

3. Système de suspension de moteur pour une motocyclette selon l'une quelconque des revendications 1 et 2, dans lequel chacun des premiers éléments élastiques et un élément correspondant parmi les deuxièmes éléments élastiques sont agencés de manière à présenter des caractéristiques élastiques différentes l'un de l'autre quant à la caractéristique directionnelle dans un plan orthogonal aux axes de l'arbre d'accouplement (40) et des arbres de support côté cadre (41).

4. Système de suspension de moteur pour une motocyclette selon l'une quelconque des revendications 1 à 3, dans lequel la paire de deuxièmes éléments de liaison (42, 88) gauche et droit sont joints l'un à l'autre par un élément d'accouplement (55, 86) entre eux, qui est agencé au-dessus d'un système d'admission du moteur (E).

5. Système de suspension de moteur pour une motocyclette selon la revendication 4, dans lequel les deux extrémités de l'élément d'accouplement (55, 86) sont respectivement fixées aux deuxièmes éléments de liaison (42, 88) gauche et droit.
